(19) Europäisches Patentamt / European Patent Office / Office européen des brevets

(11) **EP 1 582 888 B1**

(12) **FASCICULE DE BREVET EUROPEEN**

(45) Date de publication et mention de la délivrance du brevet:
**26.09.2007  Bulletin 2007/39**

(51) Int Cl.:
***G01S 3/74*** *(2006.01)*

(21) Numéro de dépôt: **05102109.5**

(22) Date de dépôt: **17.03.2005**

(54) **Procédé de localisation aveugle large bande d'un ou plusieurs émetteurs à partir d'un porteur défilant**

Verfahren zur breitbandigen blinden Ortung von einem oder mehreren Sendern durch einen sich vorbeibewegenden Träger

Method for the blind wideband localization of one or more transmitters from a carrier that is passing by

(84) Etats contractants désignés:
**AT BE BG CH CY CZ DE DK EE ES FI FR GB GR HU IE IS IT LI LT LU MC NL PL PT RO SE SI SK TR**

(30) Priorité: **30.03.2004  FR 0403295**

(43) Date de publication de la demande:
**05.10.2005  Bulletin 2005/40**

(73) Titulaire: **Thales**
**92200 Neuilly Sur Seine (FR)**

(72) Inventeurs:
• **Ferreol, Anne**
  **THALES Intellectual Property**
  **94117 CX, Arcueil (FR)**
• **Heurguier, Dominique**
  **THALES Intellectual Property**
  **94117 CX, Arcueil (FR)**

(74) Mandataire: **Lucas, Laurent Jacques**
**Marks & Clerk France**
**31-33 Avenue Aristide Briand**
**94117 Arcueil Cedex (FR)**

(56) Documents cités:
**US-A- 5 909 646**

• **CARDOSO J F ET AL: "BLIND BEAMFORMING FOR NON-GAUSSIAN SIGNALS" IEE PROCEEDINGS F. COMMUNICATIONS, RADAR & SIGNAL PROCESSING, INSTITUTION OF ELECTRICAL ENGINEERS. STEVENAGE, GB, vol. 140, no. 6, 1 décembre 1993 (1993-12-01), pages 362-370, XP000605067 ISSN: 0956-375X**
• **SHEINVALD J ET AL: "Localization of multiple sources with moving arrays" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, 21 avril 1997 (1997-04-21), pages 3521-3524, XP010226559 ISBN: 0-8186-7919-0**
• **SCHMIDT R O: "MULTIPLE EMITTER LOCATION AND SIGNAL PARAMETER ESTIMATION" IEEE TRANSACTIONS ON ANTENNAS AND PROPAGATION, IEEE INC. NEW YORK, US, vol. AP-34, no. 3, 1 mars 1986 (1986-03-01), pages 276-280, XP000644956 ISSN: 0018-926X**

EP 1 582 888 B1

## Description

L'invention concerne un procédé de localisation de plusieurs émetteurs au sol en contexte large bande à partir du défilement d'un porteur sans avoir de connaissance a priori sur les signaux émis. Le porteur peut être un avion, un hélicoptère, un bateau, etc.

Le procédé est par exemple mis en oeuvre de façon itérative pendant le défilement du porteur.

L'art antérieur décrit différentes méthodes pour localiser un ou plusieurs émetteurs à partir d'un porteur défilant.

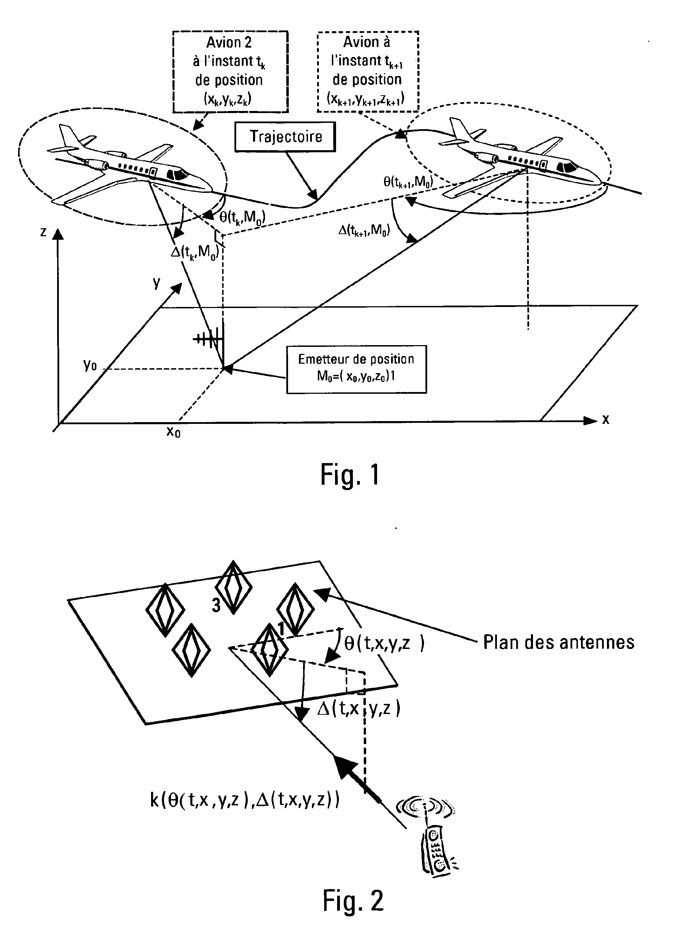

La figure 1 illustre un exemple de localisation aéroportée. L'émetteur 1 est à la position $(x_0,y_0,z_0)$ et le porteur 2 à l'instant $t_k$ est à la position $(x_k,y_k,z_k)$ et voit l'émetteur sous l'incidence $(\theta(t_k,x_0,y_0,z_0), \Delta(t_k,x_0,y_0,z_0))$. Les angles $\theta(t, x_0,y_0,z_0)$ et $\Delta(t,\mathbf{x}_0,\mathbf{y}_0,\mathbf{z}_0)$ évoluent au cours du temps et dépendent de la position de l'émetteur ainsi que de la trajectoire du porteur. Les angles $\theta(t,x_0,y_0,z_0)$ et $\Delta(t,x_0,y_0,z_0)$ sont repérés comme le montre la figure 2 par rapport à un réseau 3 de $N$ antennes pouvant être fixé sous le porteur.

Il existe plusieurs familles de techniques permettant de déterminer la position $(x_m,y_m,z_m)$ des émetteurs. Ces techniques diffèrent notamment par les paramètres estimés en instantané au niveau du réseau de capteurs. C'est ainsi qu'on peut classer les techniques de localisation dans les catégories suivantes : utilisation de la goniométrie, utilisation de la différence de phase entre 2 capteurs éloignés, utilisation de la mesure de la fréquence porteuse de l'émetteur, utilisation des temps de propagation.

La demande de brevet du demandeur FR 03/13128 décrit un procédé de localisation d'un ou de plusieurs émetteurs à partir d'un porteur défilant où les vecteurs directeurs sont mesurés dans le même canal fréquentiel et sont donc tous à la même longueur d'onde.

Le procédé selon l'invention a notamment pour objectif de réaliser une estimation directe des positions $(x_m, y_m,z_m)$ de chacun des émetteurs à partir d'une identification en aveugle des vecteurs directeurs des émetteurs à divers instants $t_k$ et à diverses longueurs d'onde $\lambda_k$.

L'analyse paramétrique aura pour fonction supplémentaire de séparer les différents émetteurs à chaque couple instant-longueur d'onde $(t_k, \lambda_{p(k)})$. Les paramètres des vecteurs issus des différents couples $(t_k, \lambda_{p(k)})$ sont ensuite associés pour, finalement, effectuer une localisation sur chacun des émetteurs.

L'invention concerne un procédé de localisation d'une ou de plusieurs sources, la ou lesdites sources étant en mouvement par rapport à un réseau de capteurs, le procédé comportant une étape de séparation des sources afin d'identifier les vecteurs directeurs associés à la réponse des capteurs à une source d'incidence donnée, caractérisé en ce qu'il comporte au moins les étapes suivantes :

 o associer les vecteurs directeurs $a_{1p(1)m}...a_{Kp(K)m}$ obtenus pour le $m^{ième}$ émetteur et respectivement pour les instants $t_1...t_K$ et pour des longueurs d'onde $\lambda_{p(1)......}, \lambda_{p(k),}$

en considérant que pour chaque couple $(t_k,\lambda_{p(k)})$, $M_k$ vecteurs $a_{kp(k)}j$ $(1<j<M_k)$ ont été identifiés, l'étape d'association pour K couples $(t_k,\lambda_{p(k)})$ comporte au moins les étapes suivantes :

AS1 Initialiser le processus à $k$=kinit, $m$=minit et $M$=Minit. Pour tous les triplets $(t_k,\lambda_{p(k)}j)$ initialiser un indicateur d'association à un émetteur flag$_{kj}$ à flag$_{kj}$(init),

AS2 Rechercher un indice $j$ et un couple $(t_k,\lambda_{p(k)})$ tel que l'indicateur flag$_{kj}$= flag$_{kj}$(init),

AS3 Pour ce 1$^{er}$ triplet $(t_k,\lambda_{p(k)},j)$ obtenu à l'étape AS2 faire flag$_{kj}$= flag$_{kj}$(init) +1 et initialiser un indicateur de test d'association à l'émetteur de ce triplet lien$_{k'i}$ =0 pour k'≠k et i'≠j et $ind_m$ ={k} et $\Phi_m$={a$_{kp(k)j}$},

AS4 Déterminer le couple $(t_{k'},\lambda_{p(k')})$ minimisant la distance d$_{kk'}$ avec $(t_k, \lambda_{p(k)})$ tel que k∈ $ind_m$ dans l'espace temps-fréquence et où il existe au moins un vecteur b$_i$= a$_{k'p(k')i}$ tel que flag$_{k'i}$= flag$_{kj(init)}$ et lien$_{k'i}$= lien$_{k'i(init)}$,

AS5 En utilisant la relation $d(a_{kpm}, b_{i(m)}) = \min_{1\leq i\leq M k'}[d(a_{kpm}, b_i)]$ déterminer l'indice $i(m)$ qui minimise l'écart entre les vecteurs $a_{kp(k)m}$ tels que k∈ $ind_m$ et les vecteurs b$_i$ identifiés aux couples instant-longueur d'onde $(t_{k'},\lambda_{p(k')})$ pour $(1\leq i\leq M_k)$ et flag$_{k'i}$=0 et lien$_{k'i}$=0,

AS6 faire lien$_{k'i(m)}$=1, le test d'association a été réalisé,

AS7 Si d$(a_{kp(k)m}, b_{i(m)}) \leq\eta$ et | $t_k$ - $t_{k'}$|<$\Delta t_{max}$ et |$\lambda_{p(k)}$ - $\lambda_{p(k')}$ |<$\Delta\lambda_{max}$ alors :

$$\Phi_m = \{\ \Phi_m\ b_{i(m)}\ \}\ ,\ ind_m = \{\ ind_m\ k\},\ flag_{k'\ i(m)} = flag_{k'\ i(m)init} + 1,$$

AS8 s'il existe au moins un doublet $(t_{k'}, \lambda_{p(k')})$ et un indice $i$ tel que lien$_{k,i}$= lien$_{k'i(init)}$ réitérer les étapes à partir de l'étape AS4,

AS9 définir la famille de vecteurs $\Phi_m = \{a_{1p(1)m} \ldots a_{K(m),p(K(m)),m}\}$ associés à la source indicée par m en posant $K(m)$ $=cardinal(\Phi_m)$, et

AS10 à partir de la famille de vecteurs $\Phi_m = \{a_{1p(1),m} \ldots a_{K(M),p(K(M),m}\}$, extraire les $J$ instants $t_i \in ind_J \subset ind_m$ qui correspondent à des points aberrants situés en dehors d'une zone définie,

AS11 retourner à l'étape AS3 s'il existe au moins un triplet $(t_k, \lambda_{p(k)}, j)$ tel que flag$_{kj}$=0.

o localiser le $m^{ième}$ émetteur à partir des composantes des vecteurs $a_{1p(1)m} \ldots a_{Kp(K)m}$ mesurés avec différentes longueurs d'onde en exécutant les étapes suivantes maximiser un critère de corrélation vectorielle normalisé $L_k(x, y, z)$ dans l'espace (x, y, z) de position d'un émetteur avec

$$L_K(x,y,z) = \frac{\left| b_K^{\ H} v_K(x,y,z) \right|^2}{\left( b_K^{\ H} b_K \right)\left( v_K(x,y,z)^H v_K(x,y,z) \right)} \quad (13)$$

avec

$$b_K = \begin{bmatrix} b_{1m} \\ \vdots \\ b_{Km} \end{bmatrix} = v_K(x_m, y_m, z_m) + w_K, \quad v_K(x,y,z) = \begin{bmatrix} b(t_1, \lambda_{p(1)}, x, y, z) \\ \vdots \\ b(t_K, \lambda_{p(K)}, x, y, z) \end{bmatrix}$$

et

$$w_K = \begin{bmatrix} w_{1m} \\ \vdots \\ w_{Km} \end{bmatrix}$$

où $w_k$ est le vecteur bruit pour toutes les positions (x, y, z) d'un émetteur. Selon un mode de réalisation, flag$_{kj}$(init) =0, lien$_{k'i(init)}$=0, m=0, M=0,

Le procédé large bande selon l'invention offre notamment les avantages suivants :

o la localisation d'un émetteur se fait par une méthode directe qui maximise un seul critère fonction des coordonnées (x,y,z) de l'émetteur,
o il permet d'effectuer une association des vecteurs directeurs des sources dans l'espace temps-fréquence, ce qui permet en particulier la prise en compte de signaux EVF (Evasion de Fréquence) et TDMA - FDMA (Time Division Multiple Access et Frequency Division Multiple Access),
o il peut être mis en oeuvre sur des réseaux calibrés ou avec des antennes à diversités d'amplitude comme les antennes colocalisées: réseau avec des dipôles de même centre de phase et ayant des orientations différentes.

D'autres caractéristiques et avantages de la présente invention apparaîtront mieux à la lecture de la description d'un exemple détaillé, donné à titre illustratif et nullement limitatif, annexé des figures qui représentent :

- la figure 1 un exemple de localisation par un avion équipé d'un réseau d'antennes d'un émetteur de position ($x_0$, $y_0$, $z_0$) au sol,

- la figure 2 un réseau de 5 antennes et les angles d'incidence d'un émetteur,

- la figure 3 un diagramme de fonctionnement général du procédé en présence de M émetteurs large bande.

Afin de mieux faire comprendre le procédé selon l'invention l'exemple qui suit est donné à titre illustratif et nullement limitatif pour un système tel que décrit à la figure 1 comprenant un avion 2 équipé d'un dispositif de réception comprenant par exemple un réseau de N capteurs (Fig.2), et d'un émetteur 1 que l'on souhaite localiser.

Avant d'expliciter les étapes du procédé selon l'invention, on définit le modèle utilisé.

**Modélisation**

En présence de $M$ émetteurs, l'avion reçoit à l'instant $t$ en sortie des $N$ capteurs du réseau et du $p^{\text{ième}}$ canal de longueur d'onde $\lambda p$, le vecteur x($t,p$).

Autour de l'instant $t_k$, le vecteur x(t+$t_k$, p) de dimension Nx1 correspondant au mélange des signaux des $M$ émetteurs s'exprime par :

$$\mathbf{x}(t+t_k,\ p) = \begin{bmatrix} x_1(t+t_k,\ p) \\ \vdots \\ x_N(t+t_k,\ p) \end{bmatrix} = \sum_{m=1}^{M} \ \mathbf{a}(\theta_{km},\Delta_{km},\ \lambda_p)\ s_m(t+t_k) + \mathbf{b}(t+t_k) \qquad (1)$$

$$=\mathbf{A}_{kp}\ \mathbf{s}(t+t_k,\ p) + \mathbf{b}(t+t_k,\ p)\ \text{pour}\ |t|<\Delta t/2$$

où

- o $\mathbf{b}(t)$ est le vecteur bruit supposé gaussien,
- o $\mathbf{a}(\theta,\Delta,\lambda,)$ est la réponse du réseau de capteurs à une source d'incidence $(\theta,\Delta)$ et de longueur d'onde $\lambda$,
- o $\mathbf{A}_{kp}=[\mathbf{a}(\theta_{k1},\Delta_{k1},\lambda_p)...\mathbf{a}(\theta_{kM},\Delta_{kM},\lambda_p)]$ correspond à la matrice de mélange, $\mathbf{s}(t)=[s_1(t)...s_M(t)]^T$ correspond au vecteur directeur,
- o $\theta_{km}=\theta(t_k,\mathbf{x}_m,\mathbf{y}_m,\mathbf{z}_m)$ et $\Delta_{km}=\Delta(t_k,\mathbf{x}_m,\mathbf{y}_m\mathbf{z}_m)$,
- o $x_n(t,\ p)$ est le signal reçu sur le $n^{\text{ième}}$ capteur du porteur en sortie du $p^{\text{ième}}$ canal fréquentiel associé à la longueur d'onde $\lambda_p$.

Dans ce modèle, la matrice $A_{kp}$ de mélange dépend de l'instant $t_k$ d'observation ainsi que de la longueur d'onde $\lambda_p$.

Le modèle ci-dessus montre que le vecteur directeur :

$$\mathbf{a}_{kpm} = \mathbf{a}(\theta_{km},\Delta_{km},\lambda_p)=\mathbf{a}(t_k\ \lambda_p,\mathbf{x}_m,\mathbf{y}_m,\ z_m)\ \text{du}\ m^{\text{ième}}\ \text{émetteur} \qquad (2)$$

à l'instant $t_k$ est une fonction connue de $(t_k,\lambda_p)$ et de la position de l'émetteur $(X_m,y_m,Z_m)$.

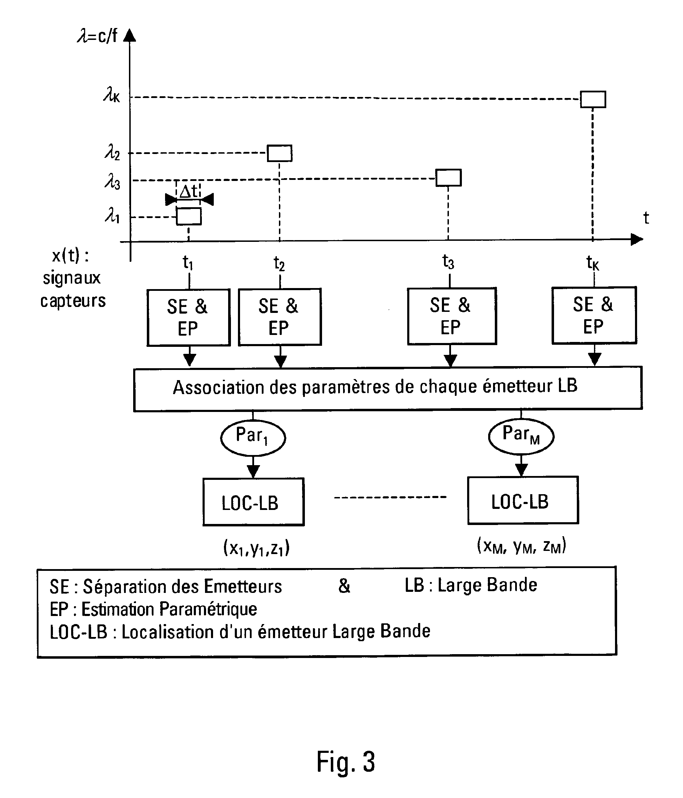

Le procédé selon l'invention comporte par exemple les étapes suivantes résumées à la figure 3 :

- l'Estimation Paramétrique (EP) et la Séparation des Emetteurs (SE) aux instants $t_k$ et longueur d'onde $\lambda_p$ par exemple en identifiant les vecteurs $\mathbf{a}_{kpm}$ pour ($1\leq m\leq M$).

Cette première étape est effectuée par des techniques de séparation et d'identification de sources décrites, par exemple dans les références [2][3].

- L'association des paramètres pour le $m^{\text{ième}}$ émetteur, par exemple en associant les vecteurs $\mathbf{a}_{1p(1)m}$ jusqu'à

$\mathbf{a}_{Kp(K)m}$ obtenus aux couples (instants, longueur d'onde) respectifs $(t_1\lambda_{p(1)})$ ... $(t_K,\lambda_{p(K)})$.

Les vecteurs directeurs $\mathbf{a}_{kpm}$ sont considérés dans un espace (temps, longueur d'onde) ou encore un espace (temps, fréquence, la fréquence étant inversement proportionnelle à la longueur d'onde).

• La localisation du $m^{\text{ième}}$ émetteur à partir des vecteurs $\mathbf{a}_{1p(1)m}$ jusqu'à $\mathbf{a}_{Kp(K)m}$ associés, LOC-LB.

**Etape d'association et suivi des émetteurs large bande**

En présence de $M$ sources ou émetteurs et après l'étape de séparation de sources où les vecteurs directeurs associés à une source sont identifiés et non associés, le procédé donne pour le couple instant-longueur d'onde $(t_k, \lambda_p)$, les $M_k$ signatures $\mathbf{a}_{kpm}$ pour $(1 \le m \le M_k)$, signature ou vecteur associé à une source.

A l'instant $t_k$, et à la longueur d'onde $\lambda_{p'}$, l'étape de séparation de source donne les $M_k$, vecteurs $\mathbf{b}_i$ pour $(1 \le i \le M_k)$. L'objectif du suivi des émetteurs est notamment de déterminer pour le $m^{\text{ième}}$ émetteur, l'indice $i(m)$ qui minimise l'écart entre les vecteurs $\mathbf{a}_{kpm}$ et $\mathbf{b}_{i(m)}$. Dans ce cas on en déduira que $\mathbf{a}_{k'p'm} = \mathbf{b}_{i(m)}$.

Pour effectuer l'association des paramètres pour le m$^{\text{ième}}$ émetteur, on définit un critère de distance entre deux vecteurs $\mathbf{u}$ et $\mathbf{v}$ soit :

$$d(\boldsymbol{u}, \boldsymbol{v}) = 1 - \frac{\left|\boldsymbol{u}^{\mathrm{H}}\boldsymbol{v}\right|^2}{\left(\boldsymbol{u}^{\mathrm{H}}\boldsymbol{u}\right)\left(\boldsymbol{v}^{\mathrm{H}}\boldsymbol{v}\right)} \tag{3}$$

H correspond à la transposée des vecteurs u ou v.
Dans ces conditions l'indice i($m$) recherché vérifie :

$$d(\boldsymbol{a}_{kpm}, \boldsymbol{b}_{i(m)}) = \min_{1 \le i \le M_{k'}} [d(\boldsymbol{a}_{kpm}, \boldsymbol{b}_i)] \tag{4}$$

Dans cette association on considère une fonction bidimensionnelle associée au m$^{\text{ième}}$ émetteur définie par :

$$\hat{\beta}_{\mathbf{m}}(t_k, \lambda_p) = d(\boldsymbol{a}_{kp(k)m}, \boldsymbol{a}_{00m}) \tag{5}$$

Au fil de l'association, on obtient par interpolation des $\hat{\beta}_m(t_k, \lambda_p)$ pour chaque émetteur indicé par m, une fonction $\beta_m(t,\lambda)$ pour $1 \le m \le M$. Cette fonction a notamment pour rôle d'éliminer les couples $(t_k, \lambda_p)$ tels que $\beta_m(t_k, \lambda_p)$ et $\hat{\beta}_m(t_k, \lambda_p)$ soient très différents : $|\hat{\beta}_m(t_k, \lambda_p) - \beta_m(t_k, \lambda_p)| > \eta$. On élimine ainsi les instants aberrants qui peuvent être associés à d'autres émetteurs.
Comme la fonction $\hat{\beta}_m(t, \lambda)$ fait intervenir la distance d(u,v) entre les vecteurs u et v, on dit que u et v sont proches lorsque :

$$d(\boldsymbol{u}, \boldsymbol{v}) < \eta \tag{6}$$

La valeur du seuil $\eta$ est choisie par exemple en fonction du modèle d'erreur suivant :

$$\boldsymbol{u} = \boldsymbol{v} + \boldsymbol{e} \tag{7}$$

où $\mathbf{e}$ est une variable aléatoire.
Lorsque les vecteurs directeurs sont estimés sur une durée de T échantillons, la loi de la variable $\mathbf{e}$ peut être approchée par une loi de Gauss d'écart type $\sigma = 1/\sqrt{T}$. Dans ces conditions, la distance d($\mathbf{u}$, $\mathbf{v}$) est proportionnelle à une loi du chi-2 à (N-1) degrés de liberté (N: longueur des vecteurs u et v).

Le rapport entre la variable aléatoire d($u$, $v$) et la loi du chi-2 vaut σ /N. Connaissant la loi de $e$ il est alors possible de déterminer le seuil η avec une certaine probabilité de fausse alarme.

Dans les étapes de l'association du procédé, on définit une distance $d_{ij}$ dans l'espace temps-longueur d'onde entre les couples $(t_i, \lambda_{p(i)})$ et $(t_j, \lambda_{p(j)})$ :

$$\mathbf{d}_{ij} = \sqrt{\left(t_i - t_j\right)^2 + \left(\lambda_{p(i)} - \lambda_{p(j)}\right)^2} \qquad (8)$$

En considérant que pour chaque couple $(t_k, \lambda_{p(k)})$, $M_k$ vecteurs $a_{kp(k)j}$ (1 <j<$M_k$) ont été identifiés, les étapes de cette association pour K couples $(t_k, \lambda_{p(k)})$ sont données ci-après.

Les étapes d'association pour K instants $t_k$ et $\lambda_p$ longueurs d'onde sont par exemple les suivantes :

**Etape AS1**     Initialisation du processus à $k=0$, $m=1$ et $M=1$. Le nombre initial d'émetteurs est déterminé par exemple au moyen d'un test de détection du nombre de sources à l'instant t0, test connu de l'Homme du métier. Pour tous les triplets $(t_k, \lambda_{p(k)}, j)$ initialisation d'un indicateur $flag_{kj}$ à $flag_{kj}=0$ : $flag_{kj}=0$ indique que le j$^{ième}$ vecteur directeur obtenu à $(t_k, \lambda_{\rho(k)})$ est associé à aucune famille de vecteurs directeurs.

**Etape AS2**     Recherche d'un indice $j$ et d'un couple $(t_k, \lambda_{p(k)})$ tel que $flag_{kj}=0$, qui traduit le fait que l'association à une famille de vecteur directeur n'est pas réalisée.

**Etape AS3**     Pour ce 1$^{er}$ triplet $(t_k, \lambda_{p(k)}, j)$, on effectue $flag_{kj}=1$ et on initialise $lien_{k'i}$ à $lien_{k'i}=0$ pour k'≠k et i'≠j et $ind_m$ $=\{k\}$ et $\Phi_m=\{a_{kp(k)j}\}$, où $\Phi_m$ est l'ensemble des vecteurs associés à la m$^{ième}$ famille ou m$^{ième}$ émetteur, $ind_m$ l'ensemble des indices $k$ des couples $(t_k, \lambda_{p(k)})$ associés au même émetteur, $lien_{ki}$ est un flag qui indique s'il a été effectué un test d'association du vecteur $a_{kp(k)i}$ du triplet $(t_k, \lambda_{p(k)}, i)$ à la m$^{ième}$ famille de vecteurs directeurs : $lien_{ki}=0$ indique que le test d'association n'a pas été effectué.

**Etape AS4**     Détermination du couple $(t_{k'}, \lambda_{p(k')})$ minimisant la distance $\mathbf{d}_{kk'}$ de la relation (8) avec $(t_k, \lambda_{p(k)})$ tel que k∈ $ind_m$ dans l'espace temps-fréquence et où il existe au moins un vecteur $\mathbf{b}_i = a_{k'p(k')i}$ tel que $flag_{k'i}=0$ et $lien_{k'i}=0$, le vecteur n'a jamais été associé à une famille d'une part et il n'a pas été effectué de test d'association à la m$^{ième}$ famille d'autre part. On recherche dans un ensemble de données résultant de la séparation des sources.

**Etape AS5**     En utilisant la relation (4) définie précédemment, on détermine l'indice $i(m)$ minimisant l'écart entre les vecteurs $a_{kp(k)m}$ tels que $k∈ind_m$ et les vecteurs $\mathbf{b}_i$ identifiés aux couples instant-longueur d'onde $(t_{k'}, \lambda_{p(k')})$ pour $(1≤i≤ M_{k'})$ et $flag_{k'i}=0$ et $lien_{k'i}=0$.

**Etape AS6**     mettre $lien_{k'i(m)}=1$ : Le test d'association à la m$^{ième}$ famille a été effectué.

**Etape AS7**     Si $\mathbf{d}(a_{kp(k)m}, \mathbf{b}_{i(m)}) ≤η$ relation (6) et $|t_k - t_{k'}|<\Delta t_{max}$ et $|\lambda_{p(k)} - \lambda_{p(k')}|<\Delta\lambda_{max}$ alors faire $\Phi_m=\{\Phi_m \mathbf{b}_{i(m)}\}$, $ind_m =\{ind_m \ k'\}$, $flag_{k' i(m)}=1$ : Le vecteur est associé à la m$^{ième}$ famille.

**Etape AS8**     Retour à l'étape AS4 s'il existe au moins un doublet $(t_{k'}, \lambda_{p(k')})$ et un indice $i$ tel que l'indicateur $lien_{k'i}=0$ et $flag_{k'i}=0$.

**Etape AS9**     En posant $K(m)=cardinal(\Phi_m)$, on a obtenu la famille de vecteurs $\Phi_m=\{a_{1p(1)m} \cdots a_{K(m),p(K(m)),m}\}$ associé à la source indicée par $m$.
Pour chaque vecteur $a_{kp(k)m}$ on associe l'estimé $\hat{\beta}_m(t_k, \lambda_p)$ de (5) puis on réalise une interpolation polynomiale des $\beta_m(t_k, \lambda_p)$ pour obtenir la fonction bidimensionnelle $\beta_m(t, \lambda)$ interpolée.

**Etape AS 10**     A partir de la famille de vecteurs $\Phi_m=\{a_{1p(1),m} \cdots a_{K(M),p(K(M)),m}\}$, extraire les $J$ instants $t_i ∈ ind_J ⊂ ind_m$ tels que les coefficients $|\beta_m(t_i, \lambda_{p(i)}) - \hat{\beta}_m(t_i, \lambda_{p(i)})| <η$ (valeur seuil) tel que $\beta_m(t_i, \lambda_{p(i)})$ n'est pas un point aberrant de la fonction $\beta_m(t, \lambda)$.
On dit que l'on a un point aberrant lorsque l'écart en module entre le point $\hat{\beta}_m(t_i, \lambda_{\rho(i)})$ et une interpolation de la fonction $\beta_m(t, \lambda)$ ne dépasse pas un seuil η.
Après ce tri, la nouvelle famille de couple est $\Phi_m = \{a_{k,p(k),m} / k ∈ ind_J\}$, $ind_m = ind_J$ et $K(M) =J$ , $M←M+1$

et $m \leftarrow M$.

**Etape AS11** Retour à l'étape AS3 s'il existe au moins un triplet $(t_k, \lambda_{p(k),j})$ tel que flag$_{kj}$=0.

**Etape AS12** $M \leftarrow M$-1.

Après l'étape AS10 on est en possession de la famille de vecteurs $\Phi_m = \{a_{1p(1),m} \cdots a_{K(M),p(K(M)),m}\}$ ne comportant pas de points aberrants. A chaque vecteur est associé une fonction $\beta_m(t,\lambda)$ ayant notamment pour rôle d'éliminer les points aberrants, qui n'appartiennent pas à une zone d'incertitude donnée par $\eta$ (Voir équations (5)(6)(7)).

Les étapes du procédé décrites ci-dessus ont notamment comme avantages :

- de déterminer automatiquement le nombre M d'émetteurs,
- de déterminer pour chaque émetteur :

  o la famille de vecteurs $\Phi_m = \{\mathbf{a}_{1p(1),m} \cdots \mathbf{a}_{K(m),p(K(m)),m}\}$,
  o le nombre $K(m)$ de vecteurs directeurs,
  o un ensemble ind d'indices indiquant les couples $(t_k, \lambda_{p(k)})$ associés aux vecteurs de l'ensemble $\Phi_m$,

- de gérer le cas de l'apparition et la disparition d'un émetteur,
- d'associer les émetteurs dans l'espace temps-longueur d'onde $(t,\lambda)$.

Le procédé d'association précédemment décrit à titre illustratif et nullement limitatif est basé sur un critère de distance des vecteurs directeurs. Sans sortir du cadre de l'invention, on peut lui adjoindre d'autres critères tels que :

- le niveau de signal reçu dans le canal considéré (critère de corrélation sur le niveau),
- l'instant de début d'émission (front) ou de détection d'un marqueur périodique (séquence de référence), permettant l'utilisation de critères de synchronisation dans le cas de signaux EVF à synchronisme temporel (paliers, TDMA, bursts, etc.),
- des caractéristiques liées à l'analyse technique du signal (forme d'onde, paramètres de modulation ...),
- etc.

L'étape suivante est de localiser les émetteurs.

**Localisation large bande d'un émetteur**

Le procédé a notamment pour objectif de déterminer la position du $m^{ième}$ émetteur à partir des composantes des vecteurs $\mathbf{a}_{1p(1)m}$ jusqu'à $\mathbf{a}_{Kp(K)m}$ mesurés avec différentes longueurs d'ondes.

Ces vecteurs $\mathbf{a}_{kp(k)m}$ ont la particularité de dépendre de l'instant $t_k$, de la longueur d'onde $\lambda_{p(k)}$ et de la position $(x_m, y_m, z_m)$ de l'émetteur. Par exemple pour un réseau composé de $N$=2 capteurs espacés d'une distance de d dans l'axe du porteur le vecteur directeur vérifie $\mathbf{a}_{kp(k)m}$.

$$\mathbf{a}_{kp(k)m} = \begin{bmatrix} 1 \\ \exp\left( j2\pi \, \frac{d}{\lambda_{p(k)}} \cos(\theta(t_k, x_m, y_m, z_m)) \cos(\Delta(t_k, x_m, y_m, z_m)) \right) \end{bmatrix} \quad (9)$$

$$= \mathbf{a}(t_k, \lambda_{p(k)}, \mathbf{x}_m, \mathbf{y}_m, \mathbf{z}_m)$$

D'après la figure 1, l'incidence $(\theta(t_k, x_m, y_m, z_m), \Delta(t_k, x_m, y_m, z_m))$ peut être directement calculée à partir de la position $(x_k, y_k, z_k)$ du porteur à l'instant $t_k$ et la position $(x_m, y_m, z_m)$ de l'émetteur.

Le procédé va par exemple construire un vecteur $\mathbf{b}_{kp(k)m}$ à partir des composantes du vecteur $\mathbf{a}_{kp(k)m}$. Le vecteur $\mathbf{b}_{kp(k)m}$ peut être un vecteur de dimension $(N$-1$)$x1 en choisissant un capteur de référence en $n=i$ :

$$\mathbf{b}_{kp(k)m} = \begin{bmatrix} \mathbf{a}_{kp(k)m}(1)/\mathbf{a}_{kp(k)m}(i) \\ \vdots \\ \mathbf{a}_{kp(k)m}(i-1)/\mathbf{a}_{kp(k)m}(i) \\ \mathbf{a}_{kp(k)m}(i+1)/\mathbf{a}_{kp(k)m}(i) \\ \vdots \\ \mathbf{a}_{kp(k)m}(N)/\mathbf{a}_{kp(k)m}(i) \end{bmatrix} = \mathbf{b}(t_k,\lambda_{p(k)},\mathsf{x}_m,\mathsf{y}_m,\mathsf{z}_m) \qquad (10)$$

où $\mathbf{a}_{kp(k)m}(n)$ est la $i^{\text{ème}}$ composante de $\mathbf{a}_{kp(k)m}$.

Ainsi dans l'exemple de l'équation (9) et en fixant i=1 on obtient :

$$\mathbf{b}_{kp(k)m} = \left[ \exp\left( j2\pi \frac{d}{\lambda_{p(k)}} \cos(\theta(t_k,x_m,y_m,z_m)) \cos(\Delta(t_k,x_m,y_m,z_m)) \right) \right] \qquad (11)$$

Sachant que les vecteurs directeurs $\mathbf{a}_{kp(k)m}$ sont estimés avec une certaine erreur $\mathbf{e}_{kp(k)m}$ telle que $\mathbf{a}_{kp(k)m} = \mathbf{a}(t_k,\lambda_{p(k)},\mathbf{x}_m,\mathbf{y}_m,\mathbf{z}_m) + \mathbf{e}_{kp(k)m}$, il en est de même pour le vecteur transformé $\mathbf{b}_{kp(k)m}$ de (10) au premier ordre lorsque $\|\mathbf{e}_{kp(k)m}\| \ll 1$.

$$\mathbf{b}_{kp(k)m} = \mathbf{b}(t_k,\lambda_{p(k)},\mathsf{x}_m,\mathsf{y}_m,\mathsf{z}_m) + \mathbf{w}_{km} \qquad (12)$$

La famille de techniques de localisation mentionnées dans l'art antérieur qui utilise le déphasage entre 2 capteurs requiert de connaître la phase du vecteur $\mathbf{b}_{kp(k)m}$. Sachant que le vecteur $\mathbf{a}_{kp(k)m}$ est une fonction de la position $(x_m,y_m,z_m)$ de l'émetteur, il en est de même pour le vecteur $\mathbf{b}_{kp(k)m}$.

Dans ces conditions, la méthode de localisation consiste par exemple à maximiser le critère de corrélation vectorielle normalisé $L_K(x,y,z)$ suivant dans l'espace (x,y,z) de position d'un émetteur.

$$L_K(\mathsf{x},\mathsf{y},\mathsf{z}) = \frac{\left| \mathbf{b}_K^{\ H} \mathbf{v}_K(x,y,z) \right|^2}{\left( \mathbf{b}_K^{\ H} \mathbf{b}_K \right) \left( \mathbf{v}_K(x,y,z)^H \mathbf{v}_K(x,y,z) \right)}$$

avec

$$\mathbf{b}_K = \begin{bmatrix} \mathbf{b}_{1m} \\ \vdots \\ \mathbf{b}_{Km} \end{bmatrix} = \mathbf{v}_K(\mathsf{x}_m,\mathsf{y}_m,\mathsf{z}_m) + \mathbf{w}_K \ , \ \mathbf{v}_K(\mathsf{x},\mathsf{y},\mathsf{z}) = \begin{bmatrix} \mathbf{b}(t_1,\lambda_{p(1)},x,y,z) \\ \vdots \\ \mathbf{b}(t_K,\lambda_{p(K)},x,y,z) \end{bmatrix}$$

et

$$(13)$$

$$\mathbf{w}_K = \begin{bmatrix} \mathbf{w}_{1m} \\ \vdots \\ \mathbf{w}_{Km} \end{bmatrix}$$

Le vecteur bruit $\mathbf{w}_K$ a pour matrice de covariance $\mathbf{R}=E[\mathbf{w}_K\,\mathbf{w}_K{}^H]$.

En supposant que l'on puisse connaître cette matrice $\mathbf{R}$, le critère peut être envisagé avec une technique de blanchiment.

Dans ces conditions on obtient le critère $L_{k'}(x,y,z)$ suivant :

$$L_{K'}(x,y,z) = \frac{\left|\mathbf{b}_K{}^H\,\mathbf{R}^{-1}\,\mathbf{v}_K(x,y,z)\right|^2}{\left(\mathbf{b}_K{}^H\mathbf{R}^{-1}\mathbf{b}_K\right)\left(\mathbf{v}_K(x,y,z)^H\mathbf{R}^{-1}\mathbf{v}_K(x,y,z)\right)} \quad \text{avec } \mathbf{R}=E[\mathbf{w}_K\,\mathbf{w}_K{}^H] \quad (14)$$

Le vecteur $\mathbf{v}_K(x,y,z)$ dépend des **K** longueurs d'ondes $\lambda_{p(1)}$ jusqu'à $\lambda_{p(K)}$. C'est pourquoi on dit que le procédé fait une localisation large bande.

Les critères $L_K(x,y,z)$ et $L_{K'}(x,y,z)$ ont l'avantage de pouvoir mettre en oeuvre une technique de localisation en présence d'un réseau de capteurs calibrés dans l'espace $(\theta,\Delta)$ à diverses longueurs d'onde $\lambda$.

Sachant qu'à l'instant $t_k$ on connaît la relation analytique liant l'incidence $(\theta(t_k,x,y,z), \Delta(t_k,x,y,z))$ de l'émetteur à sa position $(x,y,z)$, on peut alors déduire à partir de l'incidence $(\theta(t_k,x,y,z), \Delta(t_k,x,y,z))$ le vecteur $\mathbf{a}(t_k,\lambda_{p(k)},\mathbf{x}_m,\mathbf{y}_m,\mathbf{z}_m)=$ $a(\theta(t_k,x,y,z), \Delta(t_k,x,y,z),\lambda_{p(k)}$ en réalisant une interpolation de la table de calibration dans l'espace à trois dimensions $(\theta, \Delta,\lambda)$.

Dans un contexte aéroporté la connaissance de l'altitude h de l'avion permet de réduire le calcul du critère dans l'espace de recherche (x,y) en posant z=h.

Dans l'exemple des équations (9) et (11) le vecteur $\mathbf{v}_K(x,y,z)$ s'écrit de la manière suivante :

$$\mathbf{v}_K(x,y,z) = \begin{bmatrix} \exp\left(j2\pi\,\frac{d}{\lambda_{p(1)}}\cos(\theta(t_1,x,y,z))\cos(\Delta(t_1,x,y,z))\right) \\ \vdots \\ \exp\left(j2\pi\,\frac{d}{\lambda_{p(K)}}\cos(\theta(t_K,x,y,z))\cos(\Delta(t_K,x,y,z))\right) \end{bmatrix} \quad (15)$$

Dans ce procédé on peut envisager d'initialiser l'algorithme à $K=K_0$ puis ensuite de calculer de façon récursive le critère $L_K(x,y,z)$.

Dans ces conditions $L_k(x,y,z)$ se calcule récursivement de la façon suivante :

$$L_{K+1}(x,y,z) = \frac{\left|\alpha_{K+1}(x,y,z)\right|^2}{\beta_{K+1}\,\gamma_{K+1}(x,y,z)} \quad (16)$$

où $\alpha_{K+1}(x,y,z)=\alpha_K(x,y,z) + \mathbf{b}_{K+1p(K+1)m}{}^H\,\mathbf{b}(t_{K+1},\lambda_{p(K+1)},x,y,z)$

$\gamma_{K+1}(x,y,z)=\gamma_K(x,y,z) + \mathbf{b}(t_{K+1},\lambda_{p(K+1)},x,y,z)^H\,\mathbf{b}(t_{K+1},\lambda_{p(K+1)},x,y,z)$

$\beta_{K+1}=\beta_K+\mathbf{b}_{K+1p(K+1)m}{}^H\,\mathbf{b}_{K+1p(K+1)m}$

Lorsque les vecteurs $b(t_{K+1},\lambda_{p(K+1)},x,y,z)$ et $b_{kp(k)m}$ sont de normes constantes égales à $\rho$ la relation de récurrence de l'équation (16) devient :

$$L_{K+1}(x,y,z)= \frac{|\alpha_{K+1}(x,y,z)|^2}{\beta^2(K+1)^2}$$

$$(17)$$

où $\alpha_{K+1}(x,y,z)=\alpha_K(x,y,z) + \mathbf{b}_{K+1\,p(K+1)m}{}^H\mathbf{b}(t_{K+1,\lambda p(K+1)},x,y,z)$

Le procédé est décrit jusqu'ici en supposant que les émetteurs ont des positions fixes. Il peut facilement s'étendre au cas de cibles mobiles de vecteur vitesse $(v_{xm},v_{ym},v_{zm})$ pour lesquelles on dispose d'un modèle d'évolution comme pour le procédé décrit dans la demande de brevet FR 03/13128.

Le procédé selon l'invention peut s'appliquer à un très grand nombre de mesures. Dans ce cas, on diminue la valeur de K afin de réduire la complexité numérique de calcul.

Le procédé prévoit par exemple d'effectuer sur les mesures élémentaires les traitements suivants :

- décimation des couples $(t_k, \lambda_{p(k)})$,
- filtrage (lissage des mesures qui sont les vecteurs directeurs) et sous échantillonnage,
- fusionnées sur une durée définie (extraction par association de vecteur directeur pour produire une mesure de synthèse).

## Bibliographie

1 - RO.SCHMIDT - November 1981 - A signal subspace approach to multiple emitter location and spectral estimation

2 - J.F. CARDOSO A. SOULOUMIAC - December 1993 - Blind beamforming for non-gaussian signals IEE Proceedings-F, Vol. 140, N˚6, pp. 362-370

3 - P. COMON - April 1994 - Independent Component Analysis, a new concept Elsevier - Signal Processing, Vol 36, n˚3, pp 287-314

## Revendications

1. - Procédé de localisation d'une ou de plusieurs sources, la ou lesdites sources étant en mouvement par rapport à un réseau de capteurs, le procédé comportant une étape de séparation des sources afin d'identifier les vecteurs directeurs à la réponse des capteurs à une source d'incidence donnée, **caractérisé en ce qu'**il comporte au moins les étapes suivantes :

   o associer les vecteurs directeurs $\mathbf{a}_{1p(1)m}...\mathbf{a}_{Kp(K)m}$ obtenus pour le m[ième] émetteur et respectivement pour les instants $t_1...t_K$ et pour des longueurs d'onde $\lambda_{p(1)}.....,\lambda_{p(k)}$,

   en considérant que pour chaque couple $(t_k,\lambda_{p(k)})$, $M_k$ vecteurs $a_{kp(k)}j$ ($1<j<M_k$) ont été identifiés, l'étape d'association pour K couples $(t_k,\lambda_{p(k)})$ comporte au moins les étapes suivantes :

   **AS1** Initialiser le processus à $k$=kinit, $m$=minit et $M$=Minit. Pour tous les triplets $(t_k,\lambda_{p(k)},j)$ initialiser un indicateur d'association à un émetteur $flag_{kj}$ à $flag_{kj}$(init),

   **AS2** Rechercher un indice $j$ et un couple $(t_k,\lambda_{p(k)})$ tel que l'indicateur $flag_{kj}$= $flag_{kj}$(init),

   **AS$_3$** Pour ce 1er triplet $(t_k,\lambda_{p(k)}j)$ obtenu à l'étape AS2 faire $flag_{kj}$= $flag_{kj}$(init) +1 et initialiser un indicateur de test d'association à l'émetteur de ce triplet $lien_{k'i}$ =0 pour k'≠k et i'≠j et $ind_m$ ={$k$} et $\Phi_m$={$\mathbf{a}_{kp(k)j}$},

   **AS4** Déterminer le coupl $(t_{k'},\lambda_{p(k')})$ minimisant la distance $\boldsymbol{d_{kk}}$, avec $(t_k,\lambda_{p(k)})$ tel que k∈ $ind_m$ dans l'espace temps-fréquence et où il existe au moins un vecteur $\mathbf{b}_i=\mathbf{a}_{k'p(k')i}$, tel que $flag_{k'i}$=$flag_{kj(init)}$ et $lien_{k'i}$= $lien_{k'i(init)}$,

   **AS5** En utilisant la relation $d(\mathbf{a}_{kpm},\ \boldsymbol{b}_{i(m)}) = \min_{1\leq i\leq M\ k'}[d(\mathbf{a}_{kpm},\ \boldsymbol{b}_i)]$ déterminer l'indice $i(m)$ qui minimise l'écart entre les vecteurs $\mathbf{a}_{kp(k)m}$ tels que k∈$ind_m$ et les vecteurs $\mathbf{b}_i$ identifiés aux couples instant-longueur d'onde $(t_{k'},\lambda_{p(k')})$ pour $(1 \leq i\leq M_{k'})$ et $flag_{k'i}$=0 et $lien_{k'i}$=0,

   **AS6** faire $lien_{k'i(m)}$=1, le test d'association a été réalisé,

   **AS7** Si $d(a_{kp(k)m}, \boldsymbol{b}_{i(m)}\leq\eta$ et $|t_k- t_{k'}|<\Delta t_{max}$ et $|\lambda_{p(k)} - \lambda_{p(k')}|<\Delta\lambda_{max}$ alors :

$$\Phi_m = \{\ \Phi_m\ \mathbf{b}_{i(m)}\ \}\ ,\ ind_m = \{\ ind_m\ k'\},\ flag_{k'\ I(m)} = flag_{k'\ i(m)init} + 1,$$

**AS8** s'il existe au moins un doublet $(t_{k'}, \lambda_{p(k')})$ et un indice *i* tel que $lien_{k,i} = lien_{k,i(init)}$ réitérer les étapes à partir de l'étape AS4,

**AS9** définir la famille de vecteurs $\Phi_m = \{\mathbf{a}_{1p(1)m} \dots \mathbf{a}_{K(m),p(K(m)),m}\}$ associés à la source indicée par m en posant *K(m)=cardinal*($\Phi_m$), et

**AS10** à partir de la famille de vecteurs $\Phi_m = \{\mathbf{a}_{1p(1),m} \dots \mathbf{a}_{K(M),p(K(M)),m}\}$, extraire les *J* instants $t_i \in ind_J \subset ind_m$ qui correspondent à des points aberrants situés en dehors d'une zone définie,

**AS11** retourner à l'étape AS3 s'il existe au moins un triplet $(t_{k}, \lambda_{p(k),j})$ tel que $flag_{kj} = 0$.

localiser le m$^{\text{ième}}$ émetteur à partir des composantes des vecteurs $\mathbf{a}_{1p(1)m} \dots \mathbf{a}_{Kp(K)m}$ mesurés avec différentes longueurs d'onde en exécutant les étapes suivantes

maximiser un critère de corrélation vectorielle normalisé $L_k(x, y, z)$ dans l'espace (x, y, z) de position d'un émetteur avec

$$L_K(x,y,z) = \frac{\left|\mathbf{b}_K^H \mathbf{v}_K(x,y,z)\right|^2}{\left(\mathbf{b}_K^H \mathbf{b}_K\right)\left(\mathbf{v}_K(x,y,z)^H \mathbf{v}_K(x,y,z)\right)} \qquad (13)$$

avec

$$\mathbf{b}_K = \begin{bmatrix} \mathbf{b}_{1m} \\ \vdots \\ \mathbf{b}_{Km} \end{bmatrix} = \mathbf{v}_K(x_m, y_m, z_m) + \mathbf{w}_K, \quad \mathbf{v}_K(x,y,z) = \begin{bmatrix} \mathbf{b}(t_1, \lambda_{p(1)}, x, y, z) \\ \vdots \\ \mathbf{b}(t_K, \lambda_{p(K)}, x, y, z) \end{bmatrix}$$

et

$$\mathbf{w}_K = \begin{bmatrix} \mathbf{w}_{1m} \\ \vdots \\ \mathbf{w}_{Km} \end{bmatrix}$$

où $\mathbf{w}_k$ est le vecteur bruit pour toutes les positions (x, y, z) d'un émetteur,

**2.** - Procédé selon la revendication 1 **caractérisé en ce que** $flag_{kj}(init)=0$, $lien_{k'i(init)}=0$, m=0, M=0,

**3.** - Procédé selon la revendication 1 **caractérisé en ce que** le vecteur $\mathbf{b}_K$ comporte un vecteur représentatif du bruit dont les composantes sont fonctions des composantes des vecteurs $\mathbf{a}_{1m} \dots \mathbf{a}_{Km}$.

**4.** - Procédé selon la revendication 1 **caractérisé en ce qu'**il comporte une étape où l'on détermine la matrice de covariance $\mathbf{R}=E_{[}\mathbf{w}_K\mathbf{w}_K^H]$ du vecteur bruit et **en ce que** l'on maximise le critère

$$L_K'(x,y,z) = \frac{\left|\mathbf{b}_K^H \mathbf{R}^{-1} \mathbf{v}_K(x,y,z)\right|^2}{\left(\mathbf{b}_K^H \mathbf{R}^{-1} \mathbf{b}_K\right)\left(\mathbf{v}_K(x,y,z)^H \mathbf{R}^{-1} \mathbf{v}_K(x,y,z)\right)}$$

**5.** - Procédé selon la revendication 4 **caractérisé en ce que** l'évaluation du critère $L_K(x,y,z)$ et/ou du critère $L_{K}'(x,y,z)$ est récursive.

**6.** - Procédé selon l'une des revendications 1 à 5 **caractérisé en ce qu'**il comporte une étape de comparaison des maximums avec une valeur seuil.

**7.** - Procédé selon l'une des revendications 1 à 6 **caractérisé en ce que** les émetteurs à localiser sont mobiles et **en ce que** le vecteur considéré est paramétré par la position de l'émetteur à localiser et le vecteur vitesse.

**Claims**

**1.** Method for localizing one or more sources, said source or sources being in motion relative to a network of sensors, the method comprising a step for the separation of the sources in order to identify the direction vectors associated with the response of the sensors to a source at a given incidence, **characterized in that** it comprises at least the following steps :

o associating the direction vectors $\mathbf{a}_{1p(1)m} \ldots \mathbf{a}_{Kp(K)m}$ obtained for the $M^{th}$ transmitter and, respectively, for the instants $\mathbf{t}_i \ldots \mathbf{t}_k$ and for wavelengths $\lambda_{p(1)}, \ldots, \lambda_{p(K)}$,

considering that for each pair $(t_K, \lambda_{p(K)})$, $M_K$ vectors $\mathbf{a}_{kp(k)j}$ ($1<j<M_K$) have been identified, the association step for K pairs $(t_K, \lambda_{p(K)})$ comprises at least the following steps:

**AS1** Initializing of the process at $k$=kinit, $m$=minit and M=Minit, for all the triplets $(t_k, \lambda_{p(k)}, j)$, initializing a flag of association with a transmitter $flag_{kj}$ at $flag_{kj}(init)$;
**AS2** Searching for an index $j$ and a pair $(t_k, \lambda_{p(k)})$ such that the flag, $flag_{kj}=flag_{kj}$ (init) ;
**AS3** For this 1st triplet $(t_K, \lambda_{p(K), j})$ obtained at step AS2, effecting $flag_{kj}=flag_{kj}(init)+1$ and initializing a test flag of association with the transmitter of this triplet $link_{k'i}=0$ for $k' \neq k$ and $i' \neq j$ and $ind_m= \{k\}$ and $\Phi_m= \{\mathbf{a}_{kp(k)j}\}$ ;
**AS4** Determining the pair $(t_{k'}, \lambda_{p(k')})$ minimizing the distance $\mathbf{d}_{kk'}$ with $(t_{k'}, \lambda_{p(k)})$ such that $k \in ind_m$ in the time-frequency space and in which there exists at least one vector $\mathbf{b}_i=\mathbf{a}_{k'p(k')}$ such that $flag_{k'i} = flag_{kj(init)}$ and $link_{k'i} = link_{k'j(init)}$ ;

**AS5** By using the relationship $d(\mathbf{a}_{kpm}, \mathbf{b}_{i(m)}) = \min_{1 \le i \le Mk'} [d(\mathbf{a}_{kpm}, \mathbf{b}_i)]$ determining the index $i(m)$ that minimizes the difference between the vectors $\mathbf{a}_{kp(x)m}$ such that $k \in ind_m$ and the vectors $\mathbf{b}_i$ identified with the instant-wavelength pairs $(t_{k'}, \lambda_{p(k')})$ for $(1 \le i \le M_{k'})$ and $flag_{k'i}=0$ and $link_{k' \cdot i}=0$;
**AS6** Doing $link_{k'i(m)}=1$: the test of association has been performed;
**AS7** If $d(\mathbf{a}_{kp(k)m}, \mathbf{b}_{i(m)}) \le \eta$ and $|t_k - t_{k'} < \Delta t_{max}$ and $|\lambda_{p(k)} - \lambda_{p(k')}|<\Delta\lambda_{max}$ then: $\Phi_m =\{\Phi_m \ \mathbf{b}_{i(m)}\}$, $ind_m =\{ind_m \ k'\}$, $flag_{k,i(m)}=flag_{k,i(m)init}+1$ ;
**AS8** If there is at least one doublet $(t_{k'}, \lambda_{p(k')})$ and one index $i$ such that $link_{k,i} = link_{k,i \ (init)}$, then repeating the steps from the step **AS4**;
**AS9** defining the family of vectors $\Phi_m =\{\mathbf{a}_{1p(1)m} \ldots \mathbf{a}_{K(m),p(K(m)),m}\}$ associated with the source indexed by $m$ by writing $K(m) = cardinal \ (\Phi m)$ ; and
**AS10** From the family of vectors $\Phi_m =\{\mathbf{a}_{1p(1),m} \ldots \mathbf{a}_{K(M),p(K(M)),m}\}$, extracting the $J$ instants $t_i \in ind_j \subset ind_m$ which correspond to aberrant points located outside a defined zone;
**AS11** Returning to step AS3 if there is at least one triplet $(t_{k'}, \lambda_{p(k')}, j)$ such that $flag_{kj}=0$.

localizing the $m^{th}$ transmitter from the components of the vectors $\mathbf{a}_{1p(1)m} \cdots \mathbf{a}_{Kp(K)m}$ measured with different wavelengths by executing the following steps:

maximizing a criterion of standardized vector correlation $L_K(x,y,z)$ in the position space $(x,y,z)$ of a transmitter with

$$L_K(x,y,z) = \frac{\left|\mathbf{b}_K^H \mathbf{v}_K(x,y,z)\right|^2}{\left(\mathbf{b}_K^H \mathbf{b}_K\right)\left(\mathbf{v}_K(x,y,z)^H \mathbf{v}_K(x,y,z)\right)}$$

with

$$\mathbf{b}_K = \begin{bmatrix} \mathbf{b}_{1m} \\ \vdots \\ \mathbf{b}_{Km} \end{bmatrix} = \mathbf{v}_K(\mathrm{x_m,y_m,z_m}) + \mathbf{w}_K , \mathbf{v}_K(\mathrm{x,y,z}) = \begin{bmatrix} \mathbf{b}(t_1, \lambda_{p(1)}, x, y, z) \\ \vdots \\ \mathbf{b}(t_K, \lambda_{p(K)}, x, y, z) \end{bmatrix};$$

and

$$\mathbf{w}_k = \begin{bmatrix} \mathbf{w}_{1m} \\ \vdots \\ \mathbf{w}_{Km} \end{bmatrix}$$

where $\mathbf{w}_k$ is the noise vector for all the positions (x, y, z) of a transmitter.

2. Method according to Claim 1, **characterized in that**, $\text{flag}_{kj}(\text{init})=0$, $\text{link}_{k'i(\text{init})}=0$, m=0, M=0,

3. Method according to Claim 1, **characterized in that** the vector $b_k$ comprises a noise-representing vector whose components are functions of the components of the vectors $\mathbf{a_{1m} ... a_{Km}}$.

4. Method according to Claim 1, **characterized in that** it comprises a step in which the matrix of covariance $\mathbf{R}$=E $[\mathbf{w_K w_K}^H]$ of the noise vector is determined, and **in that** the following criterion is maximized

$$\mathrm{L}_K'(x,y,z) = \frac{|\mathbf{b}_K{}^H \mathbf{R}^{-1} \mathbf{v}_K(x,y,z)|^2}{\left(\mathbf{b}_K{}^H \mathbf{R}^{-1} \mathbf{b}_K\right)\left(\mathbf{v}_K(x,y,z)^H \mathbf{R}^{-1} \mathbf{v}_K(x,y,z)\right)}$$

5. Method according to Claim 4, **characterized in that** the assessment of the criterion $L_K(x,y,z)$ and/or the criterion $L_{K'}(x,y,z)$ is recursive.

6. Method according to one of Claims 1 to 5, **characterized in that** it comprises a step to compare the maximum values with a threshold value.

7. Method according to one of Claims 1 to 6, **characterized in that** the transmitters to be localized are mobile and **in that** the vector considered is parameterized by the position of the transmitter to be localized and the speed vector.

## Patentansprüche

1. Verfahren zum Lokalisieren einer oder mehrerer Quellen, wobei die eine oder die mehreren Quellen in Bezug auf ein Netz von Sensoren in Bewegung sind, wobei das Verfahren einen Schritt des Separierens der Quellen umfasst, um die Richtungsvektoren zu identifizieren, die der Antwort der Sensoren auf eine gegebene Eintrittsquelle zugeordnet sind, **dadurch gekennzeichnet, dass** es wenigstens die folgenden Schritte umfasst:

- Zuordnen der Richtungsvektoren $\mathbf{a}_{1p(1)m}...\mathbf{a}_{Kp(K)m}$, die für den m-ten Sender und für die jeweiligen Zeitpunkte $t_1 ... t_K$ und für die Wellenlängen $\lambda_{p(1)} ... \lambda_{p(K)}$ erhalten werden,

wobei unter Berücksichtigung, dass für jedes Paar $(t_k, \lambda_{p(k)})$ $M_k$ Vektoren $\mathbf{a}_{kp(k)}j(1<j<M_k)$ identifiziert worden sind, der Zuordnungsschritt für K Paare $(t_k, \lambda_{p(k)})$ wenigstens die folgenden Schritte umfasst:

**AS1** Initialisieren des Prozesses auf $k$ = kinit, $m$ = minit und $M$ = Minit und für alle Tripletts $(t_k, \lambda_{p(k)}, j)$ Initialisieren

eines Indikators der Zuordnung zu einem Sender-Flag$_{kj}$ auf Flag$_{kj}$(init),

**AS2** Suchen eines Indexes $j$ und eines Paars ($t_k$, $\lambda_{p(k)}$), derart, dass der Indikator-Flag$_{kj}$ = Flag$_{kj}$ (init),

**AS3** für dieses erste Triplett ($t_k$, $\lambda_{p(k)}$, $j$), das im Schritt AS2 erhalten wird, Setzen von Flag$_{kj}$ = Flag$_{kj}$(init) + 1 und Initialisieren eines Test-Indikators der Zuordnung zu dem Senderdieses Tripletts auf Verknüpfung$_{k'\,i'}$ = 0 für $k' \neq k$ und $i' \neq j$ und $ind_m$ = {$k$} und $\Phi_m$ = {$\mathbf{a}_{kp(k)j}$},

**AS4** Bestimmen des Paars ($t_{k'}$, $\lambda_{p(k')}$), das die Strecke $\mathbf{d}_{kk'}$ minimiert, mit ($t_k$, $\lambda_{p(k)}$) derart, dass im Zeit-Frequenzraum $k \in ind_m$ gilt, und für das wenigstens ein Vektor $\mathbf{b}_i$ = $\mathbf{a}_{k'p(k')i}$ existiert, derart, dass Flag$_{k'i}$ = Flag$_{kj(init)}$ und Verknüpfung$_{k'i}$ = Verknüpfung$_{k'(init)}$,

**AS5** unter Verwendung der Beziehung $d\!\left(\mathbf{a}_{kpm}, \mathbf{b}_{i(m)}\right) = \min_{1 \leq i \leq M_{k'}} \left\lfloor d\!\left(\mathbf{a}_{kpm}, \mathbf{b}_i\right)\right\rfloor$ Bestimmen des Indexes $i(m)$, der den Abstand zwischen den Vektoren $\mathbf{a}_{kp(k)m}$, derart, dass $k \in ind_m$, und den Vektoren $\mathbf{b}_i$, die zu den Zeitpunkt-Wellenlängen-Paaren ($t_{k'}$, $\lambda_{p(k')}$) für ($1 \leq i \leq M_{k'}$) identifiziert werden, minimiert,

**AS6** Setzen von Verknüpfung$_{k'i(m)}$ = 1, wobei der Zuordnungstest ausgeführt worden ist,

**AS7** wenn $d(\mathbf{a}_{kp(k)m}, \mathbf{b}_{i(m)}) \leq \eta$ und $|t_k - t_{k'}| < \Delta t_{max}$ und $|\lambda_{p(k)} - \lambda_{p(k')}| < \Delta\lambda_{max}$ *dann*: $\Phi_m$ = {$\Phi_m$ $\mathbf{b}_{i(m)}$}, $ind_m$ = {$ind_m$ $k'$}, Flag$_{k'i(m)}$ = Flag$_{k'i(m)init}$ +1

**AS8** falls wenigstens ein Duplett ($t_{k'}$, $\lambda_{p(k')}$) und ein Index $i$ existieren, derart, dass Verknüpfung$_{k'i}$ = Verknüpfung$_{k'i(init)}$, dann Reiterieren der Schritte beginnend bei Schritt **AS4**,

**AS9** Definieren der Familie von Vektoren $\Phi_m$ = {$\mathbf{a}_{1p(1)m} \ldots \mathbf{a}_{K(m),p(K(m)),m}$}, die der Eintrittsquelle durch $m$ zugeordnet sind, indem K($m$) = Kardinal ($\Phi_m$) gesetzt wird, und

**AS10** ausgehend von der Familie von Vektoren $\Phi_m$ = {$\mathbf{a}_{1p(1),m} \ldots \mathbf{a}_{K(M),p(K(M)),m}$} Extrahieren der $J$ Zeitpunkte $\mathbf{t}_i$ $\in ind_J \subset ind_m$, die Abweichungspunkten entsprechen, die sich außerhalb einer definierten Zone befinden,

**AS11** Zurückkehren zum Schritt AS3, falls wenigstens ein Triplett ($t_k$, $\lambda_{p(k)}$, $j$) existiert, derart, dass Flag$_{kj}$ = 0, Lokalisieren des m-ten Senders ausgehend von den Komponenten der Vektoren $\mathbf{a}_{1p(1)m} \ldots \mathbf{a}_{Kp(K)m}$ die mit unterschiedlichen Wellenlängen gemessen werden, indem die folgenden Schritte ausgeführt werden:

Maximieren eines normierten Vektorkorrelations-Kriteriums $L_k(x, y, z)$ im Raum (x,y,z) der Position eines Senders mit

$$L_K\left(\mathrm{x},\mathrm{y},\mathrm{z}\right) = \frac{\left|\mathbf{b}_K{}^H \mathbf{v}_K\left(x,y,z\right)\right|^2}{\left(\mathbf{b}_K{}^H \mathbf{b}_K\right)\left(\mathbf{v}_K\left(x,y,z\right)^H \mathbf{v}_K\left(x,y,z\right)\right)}$$

mit

$$\mathbf{b}_K = \begin{bmatrix} \mathbf{b}_{1m} \\ \vdots \\ \mathbf{b}_{Km} \end{bmatrix} = \mathbf{v}_K\left(\mathrm{x_m}, \mathrm{y_m}, \mathrm{z_m}\right) + \mathbf{w}_K, \quad \mathbf{v}_K\left(\mathrm{x},\mathrm{y},\mathrm{z}\right) = \begin{bmatrix} \mathbf{b}\left(t_1, \lambda_{p(1)}, x, y, z\right) \\ \vdots \\ \mathbf{b}\left(t_K, \lambda_{p(K)}, x, y, z\right) \end{bmatrix}$$

und

$$\mathbf{w}_k = \begin{bmatrix} \mathbf{w}_{1m} \\ \vdots \\ \mathbf{w}_{Km} \end{bmatrix}$$

wobei $\mathbf{w}_k$ der Rauschvektor für alle Positionen ($x$, $y$, $z$) eines Senders ist.

2. Verfahren nach Anspruch 1, **dadurch gekennzeichnet, dass** Flag$_{kj(init)}$ = 0, Verknüpfung$_{k'i\,(init)}$ = 0, m = 0, M = 0.

3. Verfahren nach Anspruch 1, **dadurch gekennzeichnet, dass** der Vektor $b_k$ einen Vektor enthält, der das Rauschen repräsentiert und dessen Komponenten Funktionen der Vektorkomponenten $\mathbf{a_{1m}} \ldots \mathbf{a_{Km}}$ sind.

4. Verfahren nach Anspruch 1, **dadurch gekennzeichnet, dass** es einen Schritt enthält, in dem die Kovarianzmatrix $\mathbf{R}=E[\mathbf{w}_K\mathbf{w}_K{}^H]$ des Rauschvektors bestimmt wird, und dass das Kriterium

$$L_K{}'(x,y,z) = \frac{\left|\, \mathbf{b}_K{}^H\mathbf{R}^{-1}\mathbf{v}_K(x,y,z)\,\right|^2}{\left(\mathbf{b}_K{}^H\mathbf{R}^{-1}\mathbf{b}_K\right)\left(\mathbf{v}_K(x,y,z)^H\mathbf{R}^{-1}\mathbf{v}_K(x,y,z)\right)}$$

maximiert wird.

5. Verfahren nach Anspruch 4, **dadurch gekennzeichnet dass** die Bewertung des Kriteriums $L_K(x,y,z)$ und/oder des Kriteriums $L_{K'}(x,y,z)$ rekursiv ist.

6. Verfahren nach einem der Ansprüche 1 bis 5, **dadurch gekennzeichnet, dass** es einen Schritt des Vergleichens der Maxima mit einem Schwellenwert enthält.

7. Verfahren nach einem der Ansprüche 1 bis 6, **dadurch gekennzeichnet, dass** die zu lokalisierenden Sender beweglich sind und dass der betrachtete Vektor durch die Position des zu lokalisierenden Senders und durch den Geschwindigkeitsvektor parametrisiert ist.

Fig. 1

Fig. 2

$\lambda = c/f$

$\lambda_K$

$\lambda_2$

$\lambda_3$

$\Delta t$

$\lambda_1$

t

$x(t)$ : signaux capteurs

$t_1$     $t_2$     $t_3$     $t_K$

SE & EP    SE & EP    SE & EP    SE & EP

Association des paramètres de chaque émetteur LB

$Par_1$       $Par_M$

LOC-LB  -----------   LOC-LB

$(x_1, y_1, z_1)$      $(x_M, y_M, z_M)$

SE : Séparation des Emetteurs    &    LB : Large Bande
EP : Estimation Paramétrique
LOC-LB : Localisation d'un émetteur Large Bande

Fig. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 0313128

**Littérature non-brevet citée dans la description**

- **RO.SCHMIDT.** *A signal subspace approach to multiple emitter location and spectral estimation,* Novembre 1981
- **J.F. CARDOSO ; A. SOULOUMIAC.** *Blind beamforming for non-gaussian signals IEE Proceedings-F,* Décembre 1993, vol. 140 (6), 362-370
- **P. COMON.** Independent Component Analysis, a new concept Elsevier. *Signal Processing,* Avril 1994, vol. 36 (3), 287-314